# EUROPÄISCHE PATENTSCHRIFT

(11) **EP 4 403 379 B1**
(45) Veröffentlichungstag und Bekanntmachung des Hinweises auf die Patenterteilung: **25.02.2026**
(21) Anmeldenummer: 23219260.9
(22) Anmeldetag: 21.12.2023
(51) Int. Cl.: B60C 9/00, B60C 9/20, B60C 15/00

(54) **FAHRZEUGREIFEN**
VEHICLE TYRE
PNEUMATIQUE POUR VÉHICULES

(30) Priorität: 17.01.2023 DE 102023200333
(43) Veröffentlichungstag der Anmeldung: 24.07.2024
(73) Patentinhaber: Continental Reifen Deutschland GmbH, 30175 Hannover (DE)
(72) Erfinder: Fugmann, Simon, 30175 Hannover (DE); Reinhard, Ludwig, 30175 Hannover (DE); Funk-Friedek, Sascha, 30175 Hannover (DE); Moura, Tiago, 30175 Hannover (DE)
(74) Vertreter: Continental Corporation

(56) Entgegenhaltungen:
- EP-A1- 0 635 383
- EP-A1- 2 682 281
- WO-A1-2021/074511
- US-A1- 2018 093 532

## Beschreibung

Die Erfindung betrifft einen Fahrzeugreifen.

Fahrzeugreifen bestehen aus einer Vielzahl von Reifenbauteilen.

Zu diesen Reifenbauteilen zählt eine Reifenkarkasse, die Seitenwände, der Laufstreifen, ein Reifengürtel und eine Vielzahl von weiteren Bauteilen. Alle Reifenbauteile haben eine spezielle Funktion für den Fahrzeugreifen, damit dieser eine entsprechende Stabilität und z. B. eine vorgegebene Materialfestigkeit aufweist. Weiterhin ist es wichtig, dass der Fahrzeugreifen ein möglichst geringes Gewicht besitzt, damit insb. der Rollwiderstand gering ist.

Die US 2018/093532 A1, WO 2021/074511 A1, EP 0 635 383 A1 und EP 2 682 281 A1 offenbaren bekannte Reifenkonstruktionen.

Der Erfindung lag die Aufgabe zugrunde, einen verbesserten Fahrzeugreifen bereitzustellen.

Insbesondere soll der Fahrzeugreifen ein möglichst geringes Gewicht aufweisen.

Gelöst wird die Aufgabe gemäß Anspruch 1.

Ein Vorteil der Erfindung ist insbesondere darin zu sehen, dass durch die neue Reifenkonstruktion des Fahrzeugreifens der Fahrzeugreifen ein relativ geringes Gewicht und gleichzeitig eine hohe Materialsteifigkeit besitzt.

Der Fahrzeugreifen besitzt ein relativ geringes Gewicht, da unterhalb des Laufstreifens nur noch eine Gürtellage vorgesehen ist.

Bei herkömmlichen Fahrzeugreifen umfasst der Reifengürtel mindestens zwei Gürtellagen.

Die neue Fahrzeugreifenkonstruktion weist außerdem oberhalb der Gürtellage eine Verstärkungslage auf, in der eine Vielzahl von Festigkeitsträgern angeordnet sind, die eine geringe Zugkraft bei kleinen Dehnungen aufweisen, gleichzeitig eine hohe Festigkeit im Reifenbetrieb zeigen. Der besondere Vorteil dieser Art von Festigkeitsträgern liegt darin, dass bei einem speziellen Herstellungsschritt der Reifenherstellung, beim Bombiervorgang des Reifenrohlings auf einer Aufbautrommel, die einzelnen Festigkeitsträger der Verstärkungslage gedehnt werden können. Nach der Reifenvulkanisation besitzen die Festigkeitsträger der Verstärkungslage optimale Materialeigenschaften mit einer hohen Materialsteifigkeit. Dadurch ist es ausreichend, dass der Fahrzeugreifen nur eine Gürtellage aufweist.

In einer weiteren vorteilhaften Weiterbildung der Erfindung ist vorgesehen, dass die Festigkeitsträger der Verstärkungslage in Umfangsrichtung des Fahrzeugreifens eine Winkelausrichtung von kleiner als 10 Grad aufweisen.

Dadurch lässt sich die Verstärkungslage auf einfache Weise in Form einer Spulbandage über dem Reifengürtel aufbringen.

In einer weiteren vorteilhaften Weiterbildung der Erfindung ist vorgesehen, dass die Festigkeitsträger der Verstärkungslage eine Bruchdehnung von mindestens 3% aufweisen, vorzugsweise von mindestens 4%, idealerweise von mindestens 5%.

Gemäß der Erfindung ist vorgesehen, dass die Kraft-Dehnungskurve des Festigkeitsträgers der Verstärkungslage bis zu einer Dehnung von 3 % eine geringe Steigung aufweist als bei einer Dehnung von größer als 3 %. Vorzugsweise liegt der Wert für die Kraft unter 500N/cm bei 3% Dehnung.

Diese Materialeigenschaft ist optimal für den Herstellungsprozess des Fahrzeugreifens.

In einer weiteren vorteilhaften Weiterbildung der Erfindung ist vorgesehen, dass die Festigkeitsträger ein Aramidhybrid-Kordmaterial oder ein Stahl-Textil-Hybrid-Kordmaterial umfassen. Dadurch kann eine hohe Materialsteifigkeit und ein geringer Rollwiderstand gewährleistet werden.

Es ist vorgesehen, dass die Materialenden der Karkasslage sich über die Seitenwände erstrecken und unterhalb der seitlichen Bereiche der Gürtellage enden.

Dadurch wird die Stabilität des Fahrzeugreifens im Bereich der Reifenschulter wesentlich verbessert.

In einer weiteren vorteilhaften Weiterbildung der Erfindung ist vorgesehen, dass die Festigkeitsträger der Karkasslage in Umfangsrichtung des Fahrzeugreifens eine Winkelausrichtung von kleiner oder gleich 90 Grad aufweisen, vorzugsweise ist die Winkelausrichtung kleiner oder gleich 82 Grad.

Die Reifenkarkasse besitzt dadurch im Verbund mit der Gürtellage eine hohe Stabilität.

Gemäß der Erfindung ist vorgesehen, dass die Festigkeitsträger der Gürtellage kreuzend zu den Festigkeitsträgern der Karkasslage angeordnet sind und in Umfangsrichtung des Fahrzeugreifens eine Winkelausrichtung von 20 bis 60 Grad aufweisen.

Durch die Kreuzung der Festigkeitsträger besitzt die Reifenkarkasse unterhalb des Laufstreifens eine hohe Stabilität.

In einer weiteren vorteilhaften Weiterbildung der Erfindung ist vorgesehen, dass die beiden Enden der Verstärkungslage neben den seitlichen Enden der Gürtellage abschließen.

Dadurch wird die Gürtellage fest mit der Reifenkarkasse verbunden.

Anhand von Ausführungsbeispielen wird die Erfindung im Folgenden näher beschrieben.

Es zeigen:
Fig. 1: Eine Reifenkonstruktion in einer Radialschnittansicht
Fig. 2: Eine Aufsicht auf die Ausrichtung der Festigkeitsträger der Reifenkarkasse
Fig. 3: Eine Seitenansicht von einem hybriden Festigkeitsträger
Fig. 4: Eine Kraftdehnungskurve eines hybriden Festigkeitsträgers

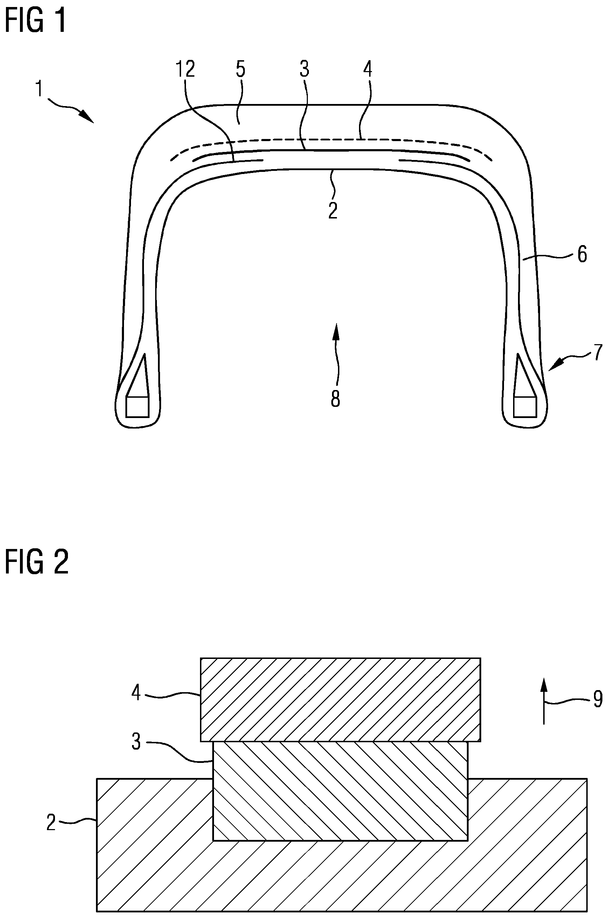

Die Figur 1 zeigt ein Ausführungsbeispiel für die neue Reifenkonstruktion. Der Fahrzeugreifen 1 weist eine Karkasslage 2 auf, die im Reifenwulst 7 um den Reifenkern und dem Apex herumgeführt ist. Die Materialenden 12 der Karkasslage 2 enden unterhalb der beiden seitlichen Bereiche der Gürtellage 3. Oberhalb der Gürtellage 3 ist eine Verstärkungslage 4 mit hybriden Festigkeitsträgern angeordnet. Der Pfeil 8 deutet die radiale Richtung des Fahrzeugreifens an.

Die Figur 2 zeigt eine Aufsicht auf die Karkasslage 2, die Gürtellage 3 und die Verstärkungslage 4. Der Pfeil 9 zeigt die Umfangsrichtung der Fahrzeugreifens an. Die Festigkeitsträger der Karkasslage 2 sind in einem Winkel von kleiner als oder gleich 82 Grad gegenüber der Umfangsrichtung 9 in der Karkasslage angeordnet. Über der Karkasslage 2 ist eine Gürtellage mit Festigkeitsträgern aus Stahlmaterial angeordnet. Die Festigkeitsträger der Gürtellage 3 sind kreuzend zu den Festigkeitsträgern der Karkasslage 2 angeordnet. Über der Gürtellage 3 ist die Verstärkungslage 4 mit den Festigkeitsträgern angeordnet. Die Festigkeitsträger sind in einem Null-Grad-Winkel zur Umfangsrichtung 9 des Fahrzeugreifens angeordnet. Sie werden insbesondere über eine Spulbandage bei der Reifenherstellung im Reifen aufgebracht.

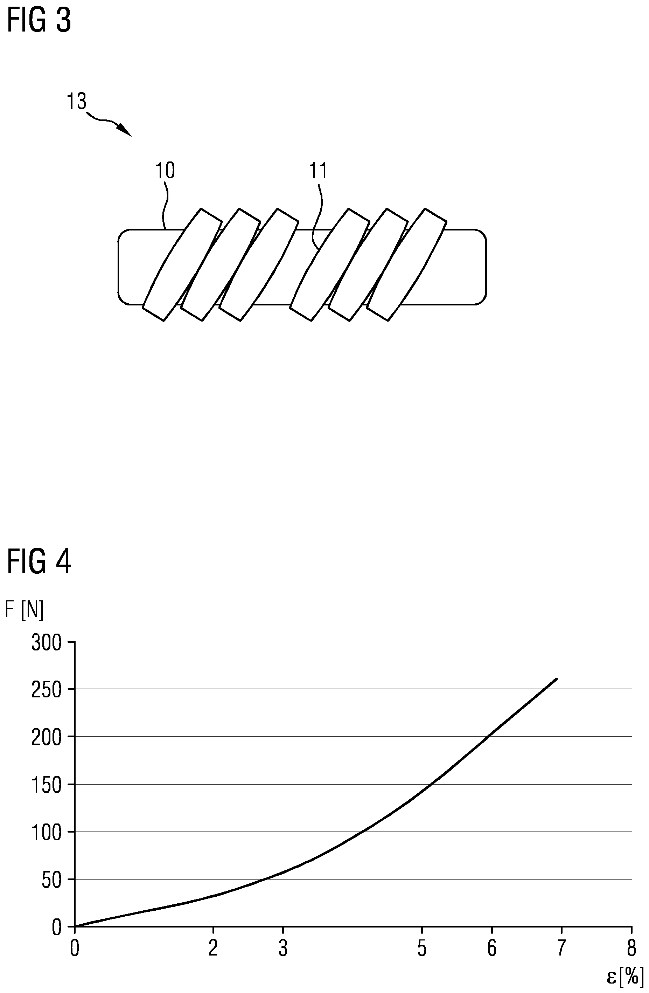

Die Figur 3 zeigt ein Beispiel für einen hybriden Festigkeitsträger in der Seitenansicht. In der Mitte ist schematisch ein Verbund 10 von textilen Festigkeitsträgern dargestellt. Auf der Außenseite des Verbundes 10 sind metallische Festigkeitsträger aus Stahlmaterial angeordnet.

Der textile Festigkeitsträger kann aus unterschiedlichen Materialien bestehen.

Das textile Verstärkungsmaterial des Festigkeitsträgers kann jedes geeignete textile Verstärkungselement sein. Gemäß einer bevorzugten Ausführungsform der vorliegenden Erfindung basiert das textile Verstärkungsmaterial aus einem Material ausgewählt aus der Gruppe bestehend aus Polyestern, Polyamiden, Polyurethanen, Glas, Kohlenstoff, Cellulosen, Polycarbonaten, Polyketonen und Kombinationen davon. Geeignete Polyester umfassen zum Beispiel Polyethylenterephthalat (PET), Polyethylennaphthalat (PEN), Polybutylenterephthalat (PBT), Polyethylenfuranoat (PEF). Beispiele für Polyamide sind Nylon-4,6 (PA 4.6), Nylon-4,10 (PA 4.10), Nylon-6 (PA 6), Nylon-6,6 (PA 6,6 Polyhexamethylenadipamid), Nylon-6,12 (PA 6.12), Nylon-10,10 (PA 10.10) und Nylon-12,12 (PA 12.12). Geeignete Polyamide umfassen ferner aromatische Polyamide wie Aramide, insbesondere m-Aramid, p-Aramid und Mischungen aus m-Aramid und p-Aramid. Geeignete Cellulosen sind beispielsweise regenerierte Cellulosen (insbesondere Viskose oder Kunstseide) und Celluloseester. Die bevorzugten Materialien für das textile Verstärkungsmaterial sind Polyester, Viskose, Aramid, Nylon und Kombinationen davon.

Die Figur 4 zeigt ein Ausführungsbeispiel für eine Kraftdehnungskurve eines hybriden Festigkeitsträgers. Auf der X-Achse ist die Dehnung des Festigkeitsträgers in Prozent aufgetragen. Auf der Y-Achse ist der Kraftverlauf in Newton aufgetragen. Der Kurvenverlauf ist nichtlinear. Bis zu einer Dehnung von etwa 3 % ist die Steigung des Kurvenverlaufes relativ gering. Danach ist die Steigung des Kurvenverlaufes signifikant höher. Der Festigkeitswert bei einer Dehnung von 3 % beträgt 500 N/cm. Die Festigkeitswerte beziehen sich auf Messungen an einzelnen Festigkeitsträgern.

### Bezugszeichenliste

- 1: Fahrzeugreifen
- 2: Karkasslage
- 3: Gürtellage
- 4: Verstärkungslage
- 5: Laufstreifen
- 6: Seitenwand
- 7: Reifenwulst mit Reifenkern und Apex
- 8: Radiale Richtung
- 9: Umfangsrichtung
- 10: Verbund von textilen Festigkeitsträgern
- 11: Verbund von metallischen Festigkeitsträgern (Stahl)
- 12: Materialenden der Karkasslage
- 13: Hybrider Festigkeitsträger

## Patentansprüche

1. Fahrzeugreifen, umfassend:
a) eine Reifenkarkasse mit mindestens einer Karkasslage (2),
wobei in der Karkasslage (2) eine Vielzahl von Festigkeitsträgern angeordnet sind,
b) einen relativ zur Reifenkarkasse außenliegenden Laufstreifen (5),
c) zwei Seitenwände (6),
d) zwei Reifenwülste (6) mit jeweils einem Reifenkern und einem Apex,
e) eine relativ zur Reifenkarkasse radial innenliegende Reifeninnenschicht,
wobei der Fahrzeugreifen (1) eine einzelne Gürtellage (3) zwischen der Karkasslage (2) und dem Laufstreifen (7) aufweist,
wobei über der Gürtellage (3) eine Verstärkungslage (4) mit einem Festigkeitsträger (13) angeordnet ist, wobei die Festigkeitsträger der Gürtellage (3) kreuzend zu den Festigkeitsträgern der Karkasslage (2) angeordnet sind und in Umfangsrichtung (9) des Fahrzeugreifens eine Winkelausrichtung von 20 bis 60 Grad aufweisen,
wobei der Festigkeitsträger (13) Materialeigenschaften mit einem nichtlinearen Kraft-Dehnungsverlauf aufweist, wobei die Kraft-Dehnungskurve des Festigkeitsträgers (13) der Verstärkungslage bis zu einer Dehnung von 3 % eine geringe Steigung aufweist als bei einer Dehnung über diesem Wert,
**dadurch gekennzeichnet, dass,**
die Materialenden (12) der Karkasslage (2) sich über die Seitenwände erstrecken und unterhalb der seitlichen Bereiche der Gürtellage (3) enden, wobei sich die Materialenden (12) der Karkasslage (2) an einer Krone des Fahrzeugreifens (1) nicht überlappen.

2. Fahrzeugreifen nach Anspruch 1,
**dadurch gekennzeichnet, dass**
die Festigkeitsträger (13) hybride Festigkeitsträger aus einem textilen und einem metallischen Material umfassen.

3. Fahrzeugreifen nach einem der vorhergehenden Ansprüche, **dadurch gekennzeichnet, dass**
die Festigkeitsträger der Verstärkungslage (4) in Umfangsrichtung (9) des Fahrzeugreifens eine Winkelausrichtung von kleiner als 10 Grad, vorzugsweise ca. 0 Grad, aufweisen.

4. Fahrzeugreifen nach einem der vorhergehenden Ansprüche, **dadurch gekennzeichnet, dass**
die Kraft-Dehnungskurve des Festigkeitsträgers (13) der Verstärkungslage bis zu einer Dehnung von 4 % oder 5% eine geringe Steigung aufweist als bei einer Dehnung über diesem Wert.

5. Fahrzeugreifen nach einem der vorhergehenden Ansprüche, **dadurch gekennzeichnet, dass**
dass die Festigkeitsträger der Verstärkungslage eine Bruchdehnung von mindestens 3% aufweisen, vorzugsweise von mindestens 4%, idealerweise von mindestens 5%.

6. Fahrzeugreifen nach einem der vorhergehenden Ansprüche, **dadurch gekennzeichnet, dass**
die Festigkeitsträger der Karkasslage (2) in Umfangsrichtung (9) des Fahrzeugreifens eine Winkelausrichtung von kleiner als oder gleich 82 Grad, vorzugsweise 90 Grad, aufweisen.

7. Fahrzeugreifen nach einem der vorhergehenden Ansprüche, **dadurch gekennzeichnet, dass**
die beiden Enden der Verstärkungslage (4) neben den seitlichen Enden der Gürtellage (3) abschließen.

## Claims

1. Vehicle tyre, comprising:
a) a tyre carcass with at least one carcass ply (2),
wherein a multiplicity of reinforcing elements are arranged in the carcass ply (2),
b) a tread (5) lying on the outside in relation to the tyre carcass,
c) two sidewalls (6),
d) two tyre beads (6) each with a tyre core and an apex,
e) an inner tyre layer lying radially on the inside in relation to the tyre carcass, wherein the vehicle tyre (1) has a single belt ply (3) between the carcass ply (2) and the tread (7),
wherein a reinforcing ply (4) with a reinforcing element (13) is arranged above the belt ply (3), the reinforcing elements of the belt ply (3) being arranged intersecting the reinforcing elements of the carcass ply (2) and having an angular orientation of 20 to 60 degrees in the circumferential direction (9) of the vehicle tyre,
wherein the reinforcing element (13) has material properties with a non-linear force-elongation profile, the force-elongation curve of the reinforcing element (13) of the reinforcing ply up to an elongation of 3% having a small gradient than at an elongation above this value,
**characterized in that**
the material ends (12) of the carcass ply (2) extend over the sidewalls and end below the lateral regions of the belt ply (3), the material ends (12) of the carcass ply (2) not overlapping at a crown of the vehicle tyre (1).

2. Vehicle tyre according to Claim 1,
**characterized in that**
the reinforcing elements (13) comprise hybrid reinforcing elements made of a textile material and a metallic material.

3. Vehicle tyre according to either of the preceding claims,
**characterized in that**
the reinforcing elements of the reinforcing ply (4) have an angular orientation of less than 10 degrees, preferably approximately 0 degrees, in the circumferential direction (9) of the vehicle tyre.

4. Vehicle tyre according to any one of the preceding claims,
**characterized in that**
the force-elongation curve of the reinforcing element (13) of the reinforcing ply up to an elongation of 4% or 5% has a small gradient than at an elongation above this value.

5. Vehicle tyre according to any one of the preceding claims,
**characterized in that**
the reinforcing elements of the reinforcing ply have a breaking elongation of at least 3%, preferably of at least 4%, ideally of at least 5%.

6. Vehicle tyre according to any one of the preceding claims,
**characterized in that**
the reinforcing elements of the carcass ply (2) have an angular orientation of less than or equal to 82 degrees, preferably 90 degrees, in the circumferential direction (9) of the vehicle tyre.

7. Vehicle tyre according to any one of the preceding claims,
**characterized in that**
the two ends of the reinforcing ply (4) end next to the lateral ends of the belt ply (3).

## Revendications

1. Pneumatique de véhicule, comprenant :
a) une carcasse de pneumatique présentant au moins une nappe carcasse (2), une pluralité de renforts étant agencés dans la nappe carcasse (2),
b) une bande de roulement (5) située à l'extérieur par rapport à la carcasse de pneumatique,
c) deux flancs latéraux (6),
d) deux talons (6) de pneumatique présentant à chaque fois un noyau de pneumatique et un sommet,
e) une couche intérieure de pneumatique située radialement à l'intérieur par rapport à la carcasse de pneumatique,
le pneumatique (1) de véhicule présentant une seule nappe ceinture (3) entre la nappe carcasse (2) et la bande de roulement (7),
une nappe de consolidation (4) présentant un renfort (13) étant agencée au-dessus de la nappe ceinture (3), les renforts de la nappe ceinture (3) étant agencés de manière croisée par rapport aux renforts de la nappe carcasse (2) et présentant une orientation angulaire de 20 à 60° dans la direction périphérique (9) du pneumatique de véhicule,
le renfort (13) présentant des propriétés matérielles dotées d'une allure de contrainte-allongement non linéaire, la courbe de contrainte-allongement du renfort (13) de la nappe de consolidation présentant une pente plus faible jusqu'à un allongement de 3% que lors d'un allongement au-dessus de cette valeur, **caractérisé en ce que**
les extrémités (12) du matériau de la nappe carcasse (2) s'étendent au-dessus des flancs latéraux et se terminent sous les zones latérales de la nappe ceinture (3), les extrémités (12) du matériau de la nappe carcasse (2) ne se chevauchant pas au niveau d'un sommet du pneumatique (1) de véhicule.

2. Pneumatique de véhicule selon la revendication 1,
**caractérisé en ce que**
les renforts (13) comprennent des renforts hybrides en un matériau textile et un matériau métallique.

3. Pneumatique de véhicule selon l'une des revendications précédentes, **caractérisé en ce que**
les renforts de la nappe de consolidation (4) présentent, dans la direction périphérique (9) du pneumatique de véhicule, une orientation angulaire inférieure à 10°, de préférence d'environ 0°.

4. Pneumatique de véhicule selon l'une des revendications précédentes, **caractérisé en ce que**
la courbe contrainte-allongement du renfort (13) de la nappe de consolidation présente une pente plus faible jusqu'à un allongement de 4% ou 5% que lors d'un allongement au-dessus de cette valeur.

5. Pneumatique de véhicule selon l'une des revendications précédentes, **caractérisé en ce que**
les renforts de la nappe de consolidation présentent un allongement à la rupture d'au moins 3%, de préférence d'au moins 4%, idéalement d'au moins 5%.

6. Pneumatique de véhicule selon l'une des revendications précédentes, **caractérisé en ce que**
les renforts de la nappe carcasse (2) présentent, dans la direction périphérique (9) du pneumatique de véhicule, une orientation angulaire inférieure ou égale à 82°, de préférence de 90°.

7. Pneumatique de véhicule selon l'une des revendications précédentes, **caractérisé en ce que**
les deux extrémités de la nappe de consolidation (4) se terminent à côté des extrémités latérales de la nappe ceinture (3).
